# EUROPEAN PATENT APPLICATION

(11) **EP 4 712 007 A1**
(43) Date of publication of application: **18.03.2026**
(21) Application number: 24802794.8
(22) Date of filing: 25.04.2024
(51) Int. Cl.: G06Q 50/00, G06F 21/31

(54) **RELATIONSHIP ESTABLISHMENT METHOD AND APPARATUS, DEVICE AND STORAGE MEDIUM**

(30) Priority: 08.05.2023 CN 202310511909
(71) Applicant: Beijing Zitiao Network Technology Co., Ltd., Beijing 100190 (CN)
(72) Inventor: YIN, Yan, Beijing 100028 (CN); JIANG, Huimin, Beijing 100028 (CN); LI, Xinyi, Beijing 100028 (CN)
(74) Representative: Isarpatent
(86) International application number: PCT/CN2024/089819
(87) International publication number: WO 2024/230509

(57) **Abstract**

Provided are a relationship establishment method and apparatus, a device and a storage medium. The method is applied to a first user side and comprises: in response to receiving a first relationship establishment request of a second user, determining whether a first switch corresponding to a first user is in an open state (S110), wherein the first user is a user having preset attributes, a media content work published by the user having the preset attributes is hidden from a user who has not established a first association relationship, and the first relationship establishment request is used for establishing the first association relationship from the second user to the first user; and if it is determined that the first switch is in the open state, in response to an accepting operation of the first user on the first relationship establishment request, sending a second relationship establishment request for the second user (S120), so as to establish a second association relationship from the first user to the second user.

## Description

The present application claims priority to Chinese Patent Application No. 202310511909.2 filed on May 8, 2023, which is incorporated herein by reference in its entirety as a part of the present application.

### TECHNICAL FIELD

Embodiments of the present disclosure relate to a relationship establishment method and an apparatus, a device, and a storage medium.

### BACKGROUND

Currently, in order to protect information of a user, some Internet platforms allow the user to set an access permission so that only other users whose follow requests are accepted by the user can access content posted by the user within the application.

### SUMMARY

The present disclosure provides a relationship establishment method and apparatus, a device, and a storage medium, which improves the efficiency of establishing an association relationship between a user having a preset attribute and a second user whose first relationship establishment request is accepted by the user having the preset attribute.

According to a first aspect, an embodiment of the present disclosure provides a relationship establishment method. The method is applied to a first user side, and includes:

in response to receiving a first relationship establishment request of a second user, determining whether a first switch corresponding to the first user is in an on state, where the first user is a user having a preset attribute, the user having the preset attribute is set to have a posted media content post hidden from a third user, the third user is a user that has not established a first association relationship to the first user, and the first relationship establishment request is used to establish the first association relationship from the second user to the first user; and

when it is determined that the first switch corresponding to the first user is in the on state, sending a second relationship establishment request for the second user in response to an accept operation of the first user for the first relationship establishment request, where the second relationship establishment request is used to establish a second association relationship from the first user to the second user.

According to a second aspect, an embodiment of the present disclosure further provides a relationship establishment apparatus. The apparatus is applied to a first user side, and includes:

a switch status detection module, configured to in response to receiving a first relationship establishment request of a second user, determine whether a first switch corresponding to the first user is in an on state, where the first user is a user having a preset attribute, the user having the preset attribute is set to have a posted media content post hidden from a third user, the third user is a user that has not established a first association relationship to the first user, and the first relationship establishment request is used to establish the first association relationship from the second user to the first user; and

a relationship establishment module, configured to when it is determined that the first switch corresponding to the first user is in the on state, send a second relationship establishment request for the second user in response to an accept operation of the first user for the first relationship establishment request, where the second relationship establishment request is used to establish a second association relationship from the first user to the second user.

According to a third aspect, an embodiment of the present disclosure further provides an electronic device. The electronic device includes:
one or more processors; and
a storage apparatus configured to store one or more programs, where
the one or more programs, when executed by the one or more processors, cause the one or more processors to implement the relationship establishment method according to the embodiments of the present disclosure.

According to a fourth aspect, an embodiment of the present disclosure further provides a storage medium including computer-executable instructions, where the computer-executable instructions, when executed by a computer processor, are used to perform the relationship establishment method according to the embodiments of the present disclosure.

### BRIEF DESCRIPTION OF DRAWINGS

The foregoing and other features, advantages, and aspects of embodiments of the present disclosure become more apparent with reference to the following specific implementations and in conjunction with the accompanying drawings. Throughout the drawings, the same or similar reference numerals denote the same or similar elements. It should be understood that the accompanying drawings are schematic and that parts and elements are not necessarily drawn to scale.
Fig. 1 is a schematic flowchart of a relationship establishment method according to an embodiment of the present disclosure;
Fig. 2 is a schematic diagram of a preset settings page according to an embodiment of the present disclosure;
Fig. 3 is a schematic diagram of a notification message according to an embodiment of the present disclosure;
Fig. 4 is a schematic diagram of another notification message according to an embodiment of the present disclosure;
Fig. 5 is a schematic flowchart of another relationship establishment method according to an embodiment of the present disclosure;
Fig. 6 is a schematic diagram of a turn-on inquiry sub-interface of a first switch associated with an accept operation according to an embodiment of the present disclosure;
Fig. 7 is a schematic diagram of a turn-on inquiry sub-interface of a first switch according to an embodiment of the present disclosure;
Fig. 8 is a schematic diagram of a structure of an apparatus of a relationship establishment method according to an embodiment of the present disclosure; and
Fig. 9 is a schematic diagram of a structure of an electronic device according to an embodiment of the present disclosure.

### DETAILED DESCRIPTION

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

As an optional but non-limiting implementation, in response to the reception of the active request from the user, the prompt information may be sent to the user in the form of, for example, a sub-interface, in which the prompt information may be presented in text. Furthermore, the sub-interface may further include a selection control for the user to choose whether to "agree" or "disagree" to provide the personal information to the electronic device.

It can be understood that the above process of notifying and obtaining the authorization of the user is only illustrative and does not constitute a limitation on the implementations of the present disclosure, and other manners that satisfy the relevant laws and regulations may also be applied in the implementations of the present disclosure.

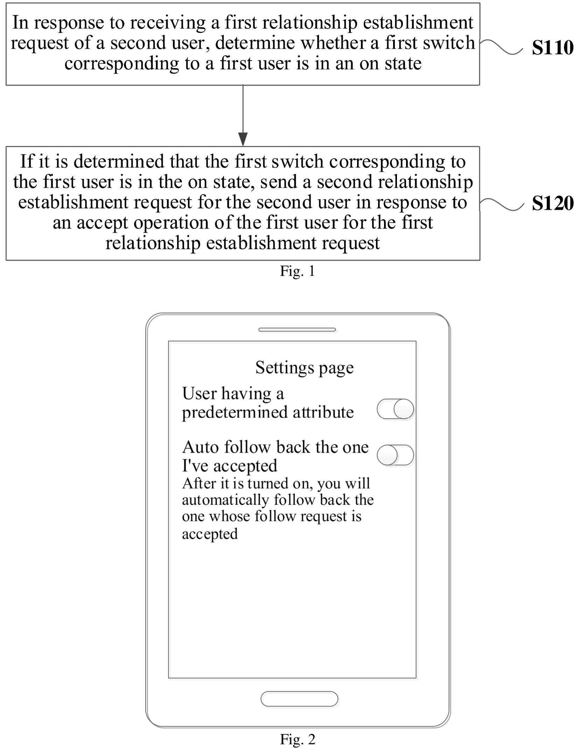

Fig. 1 is a schematic flowchart of a relationship establishment method according to an embodiment of the present disclosure. This embodiment of the present disclosure is applicable to the following case: when a first user having a preset attribute turns on a first switch, if the first user accepts a follow request sent by a second user that has not followed the first user, the first user automatically follows the second user back. The method may be performed by a relationship establishment apparatus. The apparatus may be implemented in the form of software and/or hardware, and optionally, by an electronic device. The electronic device may be a mobile terminal, a PC, etc. As shown in Fig. 1, the method is applied to a first user side and includes the following steps.

S110: In response to receiving a first relationship establishment request of a second user, determine whether a first switch corresponding to the first user is in an on state.

The first user is a user having a preset attribute, the user having the preset attribute is set to have a posted media content post hidden from a third user, the third user is a user that has not established a first association relationship to the first user, and the first relationship establishment request is used to establish the first association relationship from the second user to the first user.

In this embodiment, the user having the preset attribute may be understood as a user that has set an access permission, and only a user that has established the first association relationship to the user having the preset attribute, that is, a user whose follow request is accepted by the user having the preset attribute, can access the media content post posted in an application by the user having the preset attribute. A user that has not established the first association relationship to the user having the preset attribute, that is, a user that sends a follow request that is not accepted by the user having the preset attribute, cannot see the media content post posted by the user having the preset attribute. The second user is a user that is not followed by the first user and has not established the first association relationship to the first user. The first relationship establishment request is a follow request sent by the second user to the first user, and establishing the first association relationship means that the first user accepts the follow request sent by the second user, so that the second user unilaterally follows the first user.

In the related art, when the first user is a user having a preset attribute, after the first user accepts the follow request sent by the second user that is not followed by the first user, only the second user follows the first user unilaterally, and mutual following is not implemented between the first user and the second user. Therefore, in this embodiment, in order to help the first user to quickly achieve mutual following, the first switch corresponding to the first user is set in advance in the preset settings page of the application. When the first switch is in the on state, if the first user accepts the follow request of the second user that is not followed by the first user, a client of the first user automatically sends a follow request to the second user and follows the second user back.

In this embodiment, since a status of the first switch can determine whether the first user automatically follows back the second user whose follow request is accepted by the first user, which affects the efficiency of achieving mutual following for the first user, it is possible to first determine whether the first switch corresponding to the first user is in the on state.

Optionally, the method further includes determining, based on whether the first user is the user having the preset attribute, whether to present the first switch in a preset settings page.

In this embodiment, the display status of the first switch is associated with whether the first user is the user having the preset attribute. In an optional implementation, when the first user is set as the user having the preset attribute, the first switch and/or related information of the first switch is displayed in a designated region of the preset settings page; or when the first user is set as a user not having the preset attribute, the first switch and/or related information of the first switch is hidden in a designated region of the preset settings page. It may be understood that whether the user is the user having the preset attribute may be set by the user according to needs. As shown in Fig. 2, the designated region may be a switch configuration region below a setting region of the user having the preset attribute. The related information of the first switch includes a switch name, switch function introduction information, a switch status switching control, etc.

S120: When it is determined that the first switch corresponding to the first user is in the on state, send a second relationship establishment request for the second user in response to an accept operation of the first user for the first relationship establishment request.

The second relationship establishment request is used to establish a second association relationship from the first user to the second user, that is, to enable the first user to follow the second user back.

In this embodiment, after it is determined that the first switch corresponding to the first user is in the on state, if the first user accepts the follow request sent by the second user, the second relationship establishment request for the second user is sent to enable the first user to automatically follow the second user back, thereby achieving mutual following between the first user and the second user.

Optionally, after the sending a second relationship establishment request for the second user, the method further includes: in response to establishment of the second association relationship, displaying a preset notification message, where the preset notification message is used to indicate that both the first association relationship and the second association relationship have been established; and displaying a first interaction control in the notification message, where the first interaction control is used to implement an interactive operation between users having the first association relationship and the second association relationship. It may be understood that the first interaction control may be an interaction control corresponding to an interactive operation supported between users having a mutual following relationship. The interaction control is, for example, an interactive emoji control, a video sharing control, a resource transfer control, a games control, an audio and video call control, etc. It may be understood that the first interaction control may directly use the above control or invoke the above control through a trigger operation.

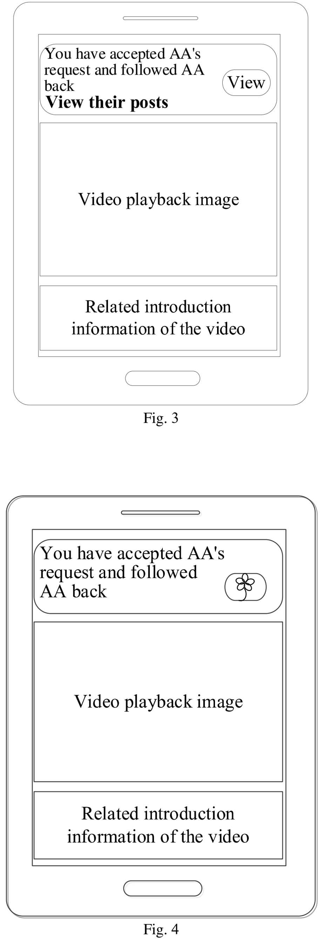

In this embodiment, as shown in Fig. 3, after the second association relationship is established between the first user and the second user to achieve mutual following, a preset notification message, such as a web banner, may be displayed in the current operation interface of the first user to inform the first user that the first association relationship and the second association relationship have been established and that mutual following has been achieved with the second user. In addition, in order to guide the first user to interact with the second user, the first interaction control, such as a "View" control in Fig. 3, may be displayed in the notification message. When the first user performs a trigger operation on the first interaction control, a jump may be made from the current operation interface to a personal page of the second user. In other embodiments, the first interaction control may alternatively be an interaction control corresponding to users with a mutual following relationship, such as an interactive emoji control for sending flowers in Fig. 4. By clicking the interactive emoji control in the preset notification message, the first user may send an interactive emoji to the second user in a conversation interface with the second user, or may enter a conversation page with the second user at the same time, etc., so that the first user and the second user may further interact.

According to the technical solution of this embodiment of the present disclosure, in response to receiving the first relationship establishment request of the second user, it is determined whether the first switch corresponding to the first user is in the on state, where the first user is the user having the preset attribute, the user having the preset attribute is set to have the posted media content post hidden from the third user, the third user is a user that has not established the first association relationship to the first user, and the first relationship establishment request is used to establish the first association relationship from the second user to the first user; and if it is determined that the first switch corresponding to the first user is in the on state, the second relationship establishment request for the second user is sent in response to the accept operation of the first user for the first relationship establishment request, where the second relationship establishment request is used to establish the second association relationship from the first user to the second user, which solves the problem of low efficiency in achieving mutual following for a user that requires an access permission in the related technology, and enables an association relationship to be easily established between the user having the preset attribute and the second user whose first relationship establishment request is accepted by the user having the preset attribute.

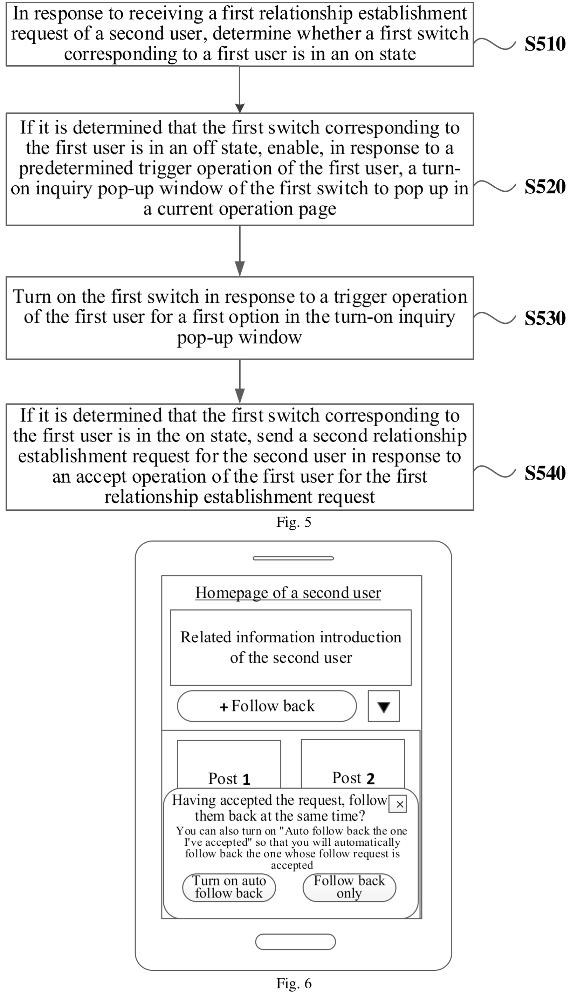

Fig. 5 is a schematic flowchart of another relationship establishment method according to an embodiment of the present disclosure. On the basis of the above embodiment, the embodiment of the present disclosure further provides the following: if it is determined that the first switch corresponding to the first user is in an off state, in response to a preset trigger operation of the first user, a turn-on inquiry sub-interface of the first switch is enabled to pop up in a current operation interface; and related content of the first switch is turned on in response to a trigger operation of the first user for a first option in the turn-on inquiry sub-interface. As shown in Fig. 5, the method is applied to a first user side and includes the following steps.

S510: In response to receiving a first relationship establishment request of a second user, determine whether the first switch corresponding to the first user is in an on state.

The first user is a user having a preset attribute, the user having the preset attribute is set to have a posted media content post hidden from a third user, the third user is a user that has not established a first association relationship to the first user, and the first relationship establishment request is used to establish the first association relationship from the second user to the first user. The first relationship establishment request may be understood as a follow request sent by the second user to the first user, and establishing the first association relationship means that the first user accepts the follow request sent by the second user, so that the second user unilaterally follows the first user.

In this embodiment, in order to help the first user that requires an access permission to quickly achieve mutual following, the first switch is set in advance for the first user in the preset settings page of the application, so that when the first user is set as the user having the preset attribute, by controlling the first switch corresponding to the first user to be in the on state, it can be ensured that when the first user accepts the follow request sent by the second user, a follow request can be automatically sent to the second user. Therefore, after the first relationship establishment request of the second user is received, it needs to first determine whether the first switch corresponding to the first user is in the on state.

S520: When it is determined that the first switch corresponding to the first user is in an off state, enable, in response to a preset trigger operation of the first user, popping up a turn-on inquiry sub-interface of the first switch in a current operation interface.

In an optional implementation, the turn-on inquiry sub-interface includes the first option and a second option, the first option includes an option to perform an accept operation and turn on the first switch, and the second option includes an option to perform an accept operation and keep the first switch off. That is, when the first option is selected, the first switch is turned on, and when the second option is selected, the first switch is kept off.

In some embodiments, the popping-up, in response to a preset trigger operation of the first user, a turn-on inquiry sub-interface of the first switch in a current operation interface includes: popping-up, in response to the accept operation of the first user for the first relationship establishment request, the turn-on inquiry sub-interface of the first switch associated with the current accept operation in the current operation interface.

In this embodiment, when a follow request is received from the second user that is not followed by the first user, the follow request will be recorded in a preset notification page based on a request time, and a remove control and an accept control corresponding to each follow request may be displayed for the user to choose whether to accept the follow request. Therefore, if the first user performs, in the preset notification page, a trigger operation on an accept control corresponding to a follow request of the second user, a turn-on inquiry sub-interface of the first switch associated with a current accept operation such as the turn-on inquiry sub-interface in Fig. 6 may be enabled to pop up at a specified location in the preset notification page, such as the bottom of the interface, to guide the first user to turn on the first switch.

In this embodiment, when the first user turns on an associated interface of the second user that is not followed by the first user, such as a personal page or a conversation page, and performs a trigger operation on an accept control corresponding to a follow request sent by the second user, a turn-on inquiry sub-interface of the first switch associated with a current accept operation as shown in Fig. 6 may be enabled to pop up at a specified location in the associated interface of the second user, such as the bottom of the interface, to guide the first user to turn on the first switch.

For example, in the turn-on inquiry sub-interface shown in Fig. 6, a name of the first switch is "Auto follow back the one I've accepted", and an "Turn on auto follow back" option in the figure may be used as the first option; a "Follow back only" option in the figure may be used as the second option to send a follow request to the second user and keep the first switch off.

In this embodiment, if the first user is the user having the preset attribute, in response to the first user performs an accept operation on the follow request sent by the second user, a turn-on inquiry sub-interface of the first switch associated with the current accept operation may be enabled to pop up in the current operation interface of the first user. In addition, in an optional implementation, the following may further be performed: in response to the first user entering a preset notification page, the turn-on inquiry sub-interface of the first switch is presented in the preset notification page; or in response to the first user entering an associated interface of the second user, the turn-on inquiry sub-interface of the first switch is displayed in the associated interface of the second user.

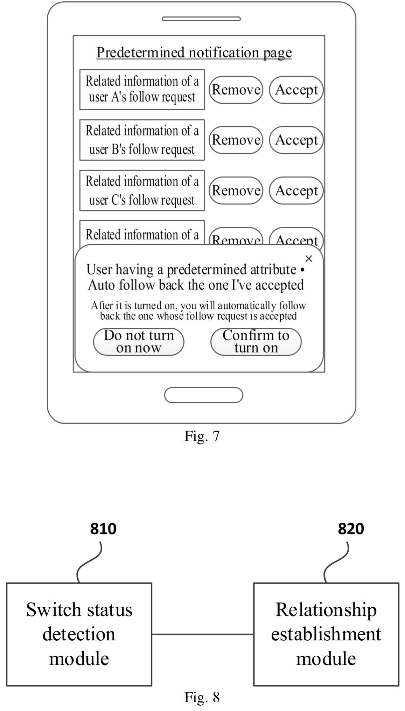

For example, the turn-on inquiry sub-interface of the first switch may be as shown in Fig. 7. A name of the first switch is "Auto follow back the one I've accepted", a "Confirm to turn on" option in the figure may be used as the first option, and a "Do not turn on now" option in the figure may be used as the second option.

S530: Turn on the first switch in response to a trigger operation of the first user for a first option in the turn-on inquiry sub-interface.

In this embodiment, if the first user selects the first option in the turn-on inquiry sub-interface, the first switch is turned on. If the first user selects the second option, the first switch is not turned on, and only an action corresponding to the second option is executed. For example, if the first user selects the "Follow back only" option in Fig. 6, the first switch is not turned on, and only the second user whose follow request is accepted this time is followed back.

Optionally, the turning on the first switch in response to a trigger operation by the first user for a first option in the turn-on inquiry sub-interface includes: in response to the trigger operation by the first user for the first option in the turn-on inquiry sub-interface, jumping from the current operation interface to the preset settings page; and turning on the first switch in response to a trigger operation by the first user for the first switch in the preset settings page.

In this embodiment, when the first user selects to turn on the first option in the turn-on inquiry sub-interface, the first switch in the preset settings page may be switched to the on state through the background, and a prompt message indicating that the first switch is successfully turned on may be enabled to pop up in the preset settings page. Alternatively, a jump may be made from the current operation interface of the first user to the preset settings page, the first user may switch the first switch in the preset settings page to the on state, and a prompt message indicating that the first switch is successfully turned on may be enabled to pop up in the preset settings page.

Optionally, after the turning on the first switch in response to a trigger operation by the first user for a first option in the turn-on inquiry sub-interface, the method further includes: when the turn-on inquiry sub-interface is associated with the accept operation of the first user for the first relationship establishment request of the second user, sending the second relationship establishment request for the second user.

In this embodiment, if the turn-on inquiry sub-interface of the first switch pops up after the first user accepts the follow request of the second user, the first user performs a trigger operation on the first option in the turn-on inquiry sub-interface, and after the first switch is turned on, the second user whose follow request is accepted is automatically followed back, and a notification message that mutual following has been achieved with the second user is enabled to pop up in the current operation interface.

S540: When it is determined that the first switch corresponding to the first user is in the on state, send a second relationship establishment request for the second user in response to an accept operation of the first user for the first relationship establishment request.

The second relationship establishment request is used to establish a second association relationship from the first user to the second user. In this embodiment, after the first switch is turned on, if the first user accepts the follow request of the second user that is not followed by the first user, the first user sends the second relationship establishment request to the second user to follow the second user, thereby achieving mutual following between the first user and the second user. In an optional implementation, in response to the first user performing a trigger operation on an accept control corresponding to the follow request of the second user in the preset notification page, the second relationship establishment request is sent to the second user to follow the second user. Alternatively, in response to the first user performing a trigger operation on an accept control of the follow request in the personal page of the second user, a second relationship establishment request is sent to the second user to follow the second user.

Optionally, after the sending a second relationship establishment request for the second user in response to an accept operation of the first user for the first relationship establishment request, the method further includes: when the accept operation is a trigger operation of the first user for an accept control corresponding to the first relationship establishment request in the preset notification page, replacing at least the accept control with a second interaction control; and in response to a trigger operation of the first user for the second interaction control, jumping to the associated interface of the second user. The second interaction control may be an interaction control corresponding to an interactive operation supported between users having a mutual following relationship.

In this embodiment, if the first user performs a trigger operation on the accept control corresponding to the first relationship establishment request of the second user in the preset notification page to accept the follow request of the second user when the first switch is in the on state, in order to guide the first user to interact with the second user, the location of the triggered accept control and remove control in the preset notification page may be replaced with the second interaction control. When the first user triggers the second interaction control, a jump is made from the current operation interface of the first user to the associated interface of the second user whose follow request is accepted, for example, the personal page or conversation page of the second user.

According to the technical solution of this embodiment of the present disclosure, in response to receiving the first relationship establishment request of the second user, it is determined whether the first switch corresponding to the first user is in the on state, where the first user is the user having the preset attribute, the user having the preset attribute is set to have the posted media content post hidden from the third user, the third user is a user that has not established the first association relationship to the first user, and the first relationship establishment request is used to establish the first association relationship from the second user to the first user; and if it is determined that the first switch corresponding to the first user is in the on state, the second relationship establishment request for the second user is sent in response to the accept operation of the first user for the first relationship establishment request, where the second relationship establishment request is used to establish the second association relationship from the first user to the second user, which solves the problem of low efficiency in achieving mutual following for a user that requires an access permission in the related technology, and enables an association relationship to be easily established between the user having the preset attribute and the second user whose first relationship establishment request is accepted by the user having the preset attribute.

Fig. 8 is a schematic diagram of a structure of an apparatus of a relationship establishment method according to an embodiment of the present disclosure. As shown in Fig. 8, the apparatus is applied to a first user side and includes: a switch status detection module 810 and a relationship establishment module 820.

The switch status detection module 810 is configured to, in response to receiving a first relationship establishment request of a second user, determine whether a first switch corresponding to the first user is in an on state, where the first user is a user having a preset attribute, the user having the preset attribute is set to have a posted media content post hidden from a third user, the third user is a user that has not established a first association relationship to the first user, and the first relationship establishment request is used to establish the first association relationship from the second user to the first user.

The relationship establishment module 820 is configured to, when it is determined that the first switch corresponding to the first user is in the on state, send a second relationship establishment request for the second user in response to an accept operation of the first user for the first relationship establishment request, where the second relationship establishment request is used to establish a second association relationship from the first user to the second user.

According to the technical solution of this embodiment of the present disclosure, in response to receiving the first relationship establishment request of the second user, it is determined whether the first switch corresponding to the first user is in the on state, where the first user is the user having the preset attribute, the user having the preset attribute is set to have the posted media content post hidden from the third user, the third user is a user that has not established the first association relationship to the first user, and the first relationship establishment request is used to establish the first association relationship from the second user to the first user; and if it is determined that the first switch corresponding to the first user is in the on state, the second relationship establishment request for the second user is sent in response to the accept operation of the first user for the first relationship establishment request, where the second relationship establishment request is used to establish the second association relationship from the first user to the second user, which solves the problem of low efficiency in achieving mutual following for a user that requires an access permission in the related technology, and improves efficiency in establishing an association relationship between the user having the preset attribute and the second user whose first relationship establishment request is accepted by the user having the preset attribute.

Optionally, the apparatus further includes a first interaction module configured to, after the second relationship establishment request for the second user is sent, in response to establishment of the second association relationship, display a preset notification message, where the preset notification message is used to indicate that both the first association relationship and the second association relationship have been established; and
display a first interaction control in the notification message, where the first interaction control is used to implement an interactive operation between users having the first association relationship and the second association relationship.

Optionally, the apparatus further includes a switch presentation module configured to determine, based on whether the first user is the user having the preset attribute, whether to present the first switch in a preset settings page.

Optionally, the switch presentation module is configured to:
when the first user is set as the user having the preset attribute, display the first switch and/or related information of the first switch in a designated region of the preset settings page; or
when the first user is set as a user not having the preset attribute, hide the first switch and/or related information of the first switch in the designated region of the preset settings page.

Optionally, the apparatus further includes a switch control module, including:
a switch turn-on guiding unit configured to, when it is determined that the first switch corresponding to the first user is in an off state, in response to a preset trigger operation of the first user, pop up a turn-on inquiry sub-interface of the first switch in a current operation interface; and
a switch turn-on unit configured to turn on the first switch in response to a trigger operation of the first user for a first option in the turn-on inquiry sub-interface.

Optionally, the turn-on inquiry sub-interface includes: the first option and a second option, and the second option includes an option to perform an accept operation and keep the first switch off.

Optionally, the switch turn-on guiding unit is configured to: in response to the accept operation of the first user for the first relationship establishment request, pop-up the turn-on inquiry sub-interface of the first switch associated with the current accept operation in the current operation interface.

Optionally, the switch turn-on guiding unit is configured to:
in response to the first user entering a preset notification page, present the turn-on inquiry sub-interface of the first switch in the preset notification page; or
in response to the first user entering an associated interface of the second user, present the turn-on inquiry sub-interface of the first switch in the associated interface of the second user.

Optionally, the switch turn-on unit is configured to:
in response to the trigger operation of the first user for the first option in the turn-on inquiry sub-interface, jump from the current operation interface to the preset settings page; and turn on the first switch in response to a trigger operation by the first user for the first switch in the preset settings page.

Optionally, the apparatus further includes a follow back module configured to, after the turning on the first switch in response to a trigger operation of the first user for a first option in the turn-on inquiry sub-interface, if the turn-on inquiry sub-interface is associated with the accept operation of the first user for the first relationship establishment request of the second user, send the second relationship establishment request for the second user.

Optionally, the second interaction module is configured to, after the second relationship establishment request for the second user is sent in response to the accept operation of the first user for the first relationship establishment request,
when the accept operation is a trigger operation of the first user for an accept control corresponding to the first relationship establishment request in the preset notification page, replace at least the accept control with a second interaction control; and
in response to a trigger operation of the first user for the second interaction control, jump to the associated interface of the second user.

The relationship establishment apparatus provided in this embodiment of the present disclosure can perform the relationship establishment method provided in any embodiment of the present disclosure, and has corresponding functional modules and beneficial effects for performing the method.

It is worth noting that the units and modules included in the above apparatus are obtained through division merely according to functional logic, but are not limited to the above division, as long as corresponding functions can be implemented. In addition, specific names of the functional units are merely used for mutual distinguishing, and are not used to limit the scope of protection of the embodiments of the present disclosure.

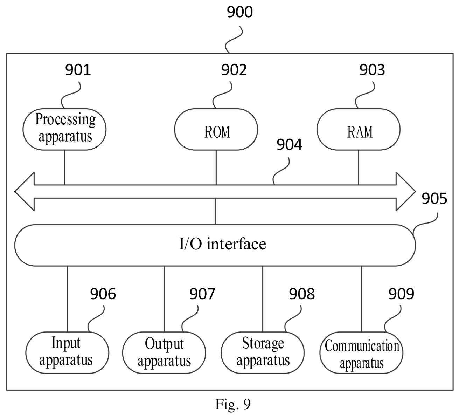

Fig. 9 is a schematic diagram of a structure of an electronic device according to an embodiment of the present disclosure. Reference is made to Fig. 9 below, which is a schematic diagram of a structure of an electronic device (such as a terminal device or a server in Fig. 9) 900 suitable for implementing embodiments of the present disclosure. A terminal device in this embodiment of the present disclosure may include, but is not limited to, mobile terminals such as a mobile phone, a notebook computer, a digital broadcast receiver, a personal digital assistant (PDA), a tablet computer (PAD), a portable media player (PMP), and a vehicle-mounted terminal (e.g., a vehicle navigation terminal), and fixed terminals such as a digital TV and a desktop computer. The electronic device shown in Fig. 9 is merely an example, and shall not impose any limitation on the function and scope of use of the embodiments of the present disclosure.

As shown in Fig. 9, the electronic device 900 may include a processing apparatus (e.g., a central processing unit or a graphics processing unit) 901 that may perform a variety of appropriate actions and processing in accordance with a program stored in a read-only memory (ROM) 902 or a program loaded from a storage apparatus 908 into a random access memory (RAM) 903. The RAM 903 further stores various programs and data required for the operation of the electronic device 900. The processing apparatus 901, the ROM 902, and the RAM 903 are connected to one another through a bus 904. An input/output (I/O) interface 905 is also connected to the bus 904.

Generally, the following apparatuses may be connected to the I/O interface 905: an input apparatus 906 including, for example, a touchscreen, a touchpad, a keyboard, a mouse, a camera, a microphone, an accelerometer, and a gyroscope; an output apparatus 907 including, for example, a liquid crystal display (LCD), a speaker, and a vibrator; the storage apparatus 908 including, for example, a tape and a hard disk; and a communication apparatus 909. The communication apparatus 909 may allow the electronic device 900 to perform wireless or wired communication with other devices to exchange data. Although Fig. 9 shows the electronic device 900 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 909, installed from the storage apparatus 908, or installed from the ROM 902. When the computer program is executed by the processing apparatus 901, the above-mentioned functions defined in the method of the embodiment of the present disclosure are performed.

The names of messages or information exchanged between a plurality of apparatuses in the implementations of the present disclosure are used for illustrative purposes only, and are not used to limit the scope of these messages or information.

The electronic device according to this embodiment of the present disclosure and the relationship establishment method according to the above embodiments belong to the same inventive concept. For the technical details not exhaustively described in this embodiment, reference may be made to the above embodiments, and this embodiment and the above embodiments have the same beneficial effects.

An embodiment of the present disclosure provides a computer storage medium storing a computer program thereon, where the program, when executed by a processor, implements the relationship establishment method according to the above embodiments.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client and a server may communicate using any currently known or future-developed network protocol such as the hypertext transfer protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to: in response to receiving a first relationship establishment request of a second user, determine whether a first switch corresponding to the first user is in an on state, where the first user is a user having a preset attribute, the user having the preset attribute is set to have a posted media content post hidden from a third user, the third user is a user that has not established a first association relationship to the first user, and the first relationship establishment request is used to establish the first association relationship from the second user to the first user; and if it is determined that the first switch corresponding to the first user is in the on state, send a second relationship establishment request for the second user in response to an accept operation of the first user for the first relationship establishment request, where the second relationship establishment request is used to establish a second association relationship from the first user to the second user.

The computer program code for performing the operations in the present disclosure may be written in one or more programming languages or a combination thereof, where the programming languages include, but are not limited to, an object-oriented programming language, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, Example 1 provides a relationship establishment method. The method is applied to a first user side, and includes:
in response to receiving a first relationship establishment request of a second user, determining whether a first switch corresponding to the first user is in an on state, where the first user is a user having a preset attribute, the user having the preset attribute is set to have a posted media content post hidden from a third user, the third user is a user that has not established a first association relationship to the first user, and the first relationship establishment request is used to establish the first association relationship from the second user to the first user; and
when it is determined that the first switch corresponding to the first user is in the on state, sending a second relationship establishment request for the second user in response to an accept operation of the first user for the first relationship establishment request, where the second relationship establishment request is used to establish a second association relationship from the first user to the second user.

According to one or more embodiments of the present disclosure, Example 2 is based on the method of Example 1, where after the sending a second relationship establishment request for the second user, the method further includes:
in response to the establishment of the second association relationship, displaying a preset notification message, where the preset notification message is used to indicate that both the first association relationship and the second association relationship have been established; and
displaying a first interaction control in the notification message, where the first interaction control is used to implement interactive operations between the users having the first association relationship and the second association relationship.

According to one or more embodiments of the present disclosure, Example 3 is based on the method of Example 1, where the method further includes:
determining, based on whether the first user is the user having the preset attribute, whether to present the first switch in a preset settings page.

According to one or more embodiments of the present disclosure, Example 4 is based on the method of Example 3, where the determining, based on whether the first user is the user having the preset attribute, whether to present the first switch in a preset settings page includes:
when the first user is set as the user having the preset attribute, displaying the first switch and/or related information of the first switch in a designated region of the preset settings page; or
when the first user is set as a user not having the preset attribute, hiding the first switch and/or related information of the first switch in a designated region of the preset settings page.

According to one or more embodiments of the present disclosure, Example 5 is based on the method of Example 1, where the method further includes:
when it is determined that the first switch corresponding to the first user is in an off state, enabling, in response to a preset trigger operation of the first user, a turn-on inquiry sub-interface of the first switch to pop up in a current operation interface; and
turning on the first switch in response to a trigger operation of the first user for a first option in the turn-on inquiry sub-interface.

According to one or more embodiments of the present disclosure, Example 6 is based on the method of Example 5, where the turn-on inquiry sub-interface includes: the first option and a second option, and the second option includes an option to perform an accept operation and keep the first switch off.

According to one or more embodiments of the present disclosure, Example 7 is based on the method of Example 5, where the enabling, in response to a preset trigger operation of the first user, a turn-on inquiry sub-interface of the first switch to pop up in a current operation interface includes:
enabling, in response to the accept operation of the first user for the first relationship establishment request, the turn-on inquiry sub-interface of the first switch associated with the current accept operation to pop up in the current operation interface.

According to one or more embodiments of the present disclosure, Example 8 is based on the method of Example 5, where the enabling, in response to a preset trigger operation of the first user, a turn-on inquiry sub-interface of the first switch to pop up in a current operation interface includes:
in response to the first user entering a preset notification page, displaying the turn-on inquiry sub-interface of the first switch in the preset notification page; or
in response to the first user entering an associated interface of the second user, displaying the turn-on inquiry sub-interface of the first switch in the associated interface of the second user.

According to one or more embodiments of the present disclosure, Example 9 is based on the method of Example 5, where the turning on the first switch in response to a trigger operation of the first user for a first option in the turn-on inquiry sub-interface includes:
in response to the trigger operation of the first user for the first option in the turn-on inquiry sub-interface, jumping from the current operation interface to the preset settings page; and
turning on the first switch in response to a trigger operation of the first user for the first switch in the preset settings page.

According to one or more embodiments of the present disclosure, Example 10 is based on the method of Example 7, where after the turning on the first switch in response to a trigger operation of the first user for a first option in the turn-on inquiry sub-interface, the method further includes:
when the turn-on inquiry sub-interface is associated with the accept operation of the first user for the first relationship establishment request of the second user, sending the second relationship establishment request for the second user.

According to one or more embodiments of the present disclosure, Example 11 is based on the method of Example 8, where after the sending a second relationship establishment request for the second user in response to an accept operation of the first user for the first relationship establishment request, the method further includes:
when the accept operation is a trigger operation of the first user for an accept control corresponding to the first relationship establishment request in the preset notification page, replacing at least the accept control with a second interaction control; and
in response to a trigger operation of the first user for the second interaction control, jumping to the associated interface of the second user.

According to one or more embodiments of the present disclosure, Example 12 provides a relationship establishment apparatus. The apparatus is applied to a first user side, and includes:
a switch status detection module, configured to in response to receiving a first relationship establishment request of a second user, determine whether a first switch corresponding to the first user is in an on state, where the first user is a user having a preset attribute, the user having the preset attribute is set to have a posted media content post hidden from a third user, the third user is a user that has not established a first association relationship to the first user, and the first relationship establishment request is used to establish the first association relationship from the second user to the first user; and
a relationship establishment module, configured to when it is determined that the first switch corresponding to the first user is in the on state, send a second relationship establishment request for the second user in response to an accept operation of the first user for the first relationship establishment request, where the second relationship establishment request is used to establish a second association relationship from the first user to the second user.

According to one or more embodiments of the present disclosure, Example 13 provides an electronic device. The electronic device includes:
one or more processors; and
a storage apparatus configured to store one or more programs, where the one or more programs, when executed by the one or more processors, cause the one or more processors to implement the relationship establishment method according to any one of Examples 1 to 11.

According to one or more embodiments of the present disclosure, Example 14 provides a storage medium including computer-executable instructions that, when executed by a computer processor, are used to perform the relationship establishment method according to any one of Examples 1 to 11.

The foregoing descriptions are merely optional embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A relationship establishment method, applied to a first user side, the method comprising:
determining whether a first switch corresponding to a first user is in an on state in response to receiving a first relationship establishment request of a second user, wherein the first user is a user having a preset attribute, the user having the preset attribute is set to have a posted media content post hidden from a third user, the third user is a user that has not established a first association relationship to the first user, and the first relationship establishment request is used to establish the first association relationship from the second user to the first user; and
when it is determined that the first switch corresponding to the first user is in the on state, sending a second relationship establishment request for the second user in response to an accept operation of the first user for the first relationship establishment request, wherein the second relationship establishment request is used to establish a second association relationship from the first user to the second user.

2. The method according to claim 1, wherein after the sending a second relationship establishment request for the second user, the method further comprises:
displaying a preset notification message in response to establishment of the second association relationship, wherein the preset notification message is used to indicate that both the first association relationship and the second association relationship have been established; and
displaying a first interaction control in the notification message, wherein the first interaction control is used to implement an interactive operation between users having the first association relationship and the second association relationship.

3. The method according to claim 1 or 2, further comprising:
determining, based on whether the first user is the user having the preset attribute, whether to display the first switch in a preset settings page.

4. The method according to claim 3, wherein the determining, based on whether the first user is the user having the preset attribute, whether to display the first switch in a preset settings page comprises:
when the first user is set as the user having the preset attribute, displaying the first switch and/or related information of the first switch in a designated region of the preset settings page; or
when the first user is set as a user not having the preset attribute, hiding the first switch and/or related information of the first switch in the designated region of the preset settings page.

5. The method according to any one of claims 1 to 4, further comprising:
when it is determined that the first switch corresponding to the first user is in an off state, popping up a turn-on inquiry sub-interface of the first switch in a current operation interface in response to a preset trigger operation of the first user; and
turning on the first switch in response to a trigger operation by the first user for a first option in the turn-on inquiry sub-interface.

6. The method according to claim 5, wherein the turn-on inquiry sub-interface comprises the first option and a second option, and the second option comprises an option to perform an accept operation and keep the first switch off.

7. The method according to claim 5 or 6, wherein the popping up a turn-on inquiry sub-interface of the first switch in a current operation interface in response to a preset trigger operation of the first user comprises:
popping up the turn-on inquiry sub-interface of the first switch associated with a current accept operation in the current operation interface in response to the accept operation of the first user for the first relationship establishment request.

8. The method according to claim 5 or 6, wherein the popping up a turn-on inquiry sub-interface of the first switch in a current operation interface in response to a preset trigger operation of the first user comprises:
displaying the turn-on inquiry sub-interface of the first switch in a preset notification page in response to the first user entering the preset notification page; or
displaying the turn-on inquiry sub-interface of the first switch in an associated interface of the second user in response to the first user entering the associated interface of the second user.

9. The method according to any one of claims 5 to 8, wherein the turning on the first switch in response to a trigger operation by the first user for a first option in the turn-on inquiry sub-interface comprises:
jumping from the current operation interface to a preset settings page in response to the trigger operation by the first user for the first option in the turn-on inquiry sub-interface; and
turning on the first switch in response to a trigger operation by the first user for the first switch in the preset settings page.

10. The method according to claim 7, wherein after the turning on the first switch in response to a trigger operation by the first user for a first option in the turn-on inquiry sub-interface, the method further comprises:
when the turn-on inquiry sub-interface is associated with the accept operation of the first user for the first relationship establishment request of the second user, sending the second relationship establishment request for the second user.

11. The method according to claim 8, wherein after the sending a second relationship establishment request for the second user in response to an accept operation of the first user for the first relationship establishment request, the method further comprises:
when the accept operation is a trigger operation by the first user for an accept control corresponding to the first relationship establishment request in the preset notification page, replacing at least the accept control with a second interaction control; and
jumping to the associated interface of the second user in response to a trigger operation of the first user for the second interaction control.

12. A relationship establishment apparatus, applied to a first user side, the apparatus comprising:
a switch status detection module, configured to determine whether a first switch corresponding to a first user is in an on state in response to receiving a first relationship establishment request of a second user, wherein the first user is a user having a preset attribute, the user having the preset attribute is set to have a posted media content post hidden from a third user, the third user is a user that has not established a first association relationship to the first user, and the first relationship establishment request is used to establish the first association relationship from the second user to the first user; and
a relationship establishment module, configured to, when it is determined that the first switch corresponding to the first user is in the on state, send a second relationship establishment request for the second user in response to an accept operation of the first user for the first relationship establishment request, wherein the second relationship establishment request is used to establish a second association relationship from the first user to the second user.

13. An electronic device, comprising:
one or more processors; and
a storage apparatus, configured to store one or more programs,
wherein the one or more programs, when executed by the one or more processors, cause the one or more processors to implement the relationship establishment method according to any one of claims 1 to 11.

14. A storage medium, comprising computer-executable instructions, wherein the computer-executable instructions, when executed by a computer processor, are used to perform the relationship establishment method according to any one of claims 1 to 11.
